# EUROPEAN PATENT SPECIFICATION

(11) **EP 4 361 617 B1**
(45) Date of publication and mention of the grant of the patent: **18.06.2025**
(21) Application number: 23205530.1
(22) Date of filing: 24.10.2023
(51) Int. Cl.: G01N 23/223

(54) **METHOD FOR PREPARING SAMPLES FOR SPECTROMETRIC ANALYSIS BY X-RAY FLUORESCENCE**
VERFAHREN ZUR VORBEREITUNG VON PROBEN FÜR DIE SPEKTROMETRISCHE ANALYSE MITTELS RÖNTGENFLUORESZENZ
PROCÉDÉ DE PRÉPARATION D'ÉCHANTILLONS POUR ANALYSE SPECTROMÉTRIQUE PAR FLUORESCENCE X

(30) Priority: 27.10.2022 IT 202200022197
(43) Date of publication of application: 01.05.2024
(73) Proprietor: Cogne Acciai Speciali S.p.A., 11100 Aosta (IT)
(72) Inventor: FRANCISCONO, Andrea, 11100 Aosta (IT); ROLLET, Simona, 11100 Aosta (IT)
(74) Representative: Bruni, Giovanni

(56) References cited:
- CN-A- 108 872 283
- CN-A- 110 118 792
- CN-A- 111 024 740
- MZYK ZOFIA ET AL: "Research on grain size effect in XRF analysis of pelletized samples", X-RAY SPECTROMETRY, vol. 31, no. 1, 2002, GB, pages 39 - 46, XP093037828, ISSN: 0049-8246, DOI: 10.1002/xrs.534
- COEDO A G ET AL: "Determination of minor elements in steelmaking flue dusts using laser ablation inductively coupled plasma mass spectrometry", TALANTA, ELSEVIER, AMSTERDAM, NL, vol. 67, no. 1, 15 July 2005 (2005-07-15), pages 136 - 143, XP027859838, ISSN: 0039-9140, [retrieved on 20050715]
- TRIANTAFYLLOU A. ET AL: "Optimizing multiple non-invasive techniques (PXRF, pMS, IA) to characterize coarse-grained igneous rocks used as building stones", JOURNAL OF ARCHAEOLOGICAL SCIENCE, vol. 129, May 2021 (2021-05-01), US, pages 105376, XP093037824, ISSN: 0305-4403, DOI: 10.1016/j.jas.2021.105376
- LI XIAO-LI ET AL: "Investigation of a high-pressure pressed powder pellet technique for the analysis of coal by wavelength dispersive X-ray fluorescence spectroscopy", APPLIED RADIATION AND ISOTOPES, ELSEVIER, OXFORD, GB, vol. 132, 8 November 2017 (2017-11-08), pages 170 - 177, XP085332553, ISSN: 0969-8043, DOI: 10.1016/J.APRADISO.2017.11.003

## Description

### Field of the invention

The present invention relates to a method for preparing powder samples, in tablet form, for spectrometric analysis using X-ray fluorescence (XRF_X-ray fluorescence spectroscopy). In particular for use in the chemical analysis sector of solid powder samples: oxides, cements, slag, minerals, powder metals, etc.

### Brief Description of the Prior Art

Infact, as is known, XRF spectrophotometry is a non-destructive analysis technique that allows us to know the elemental composition of a sample through the study of typically achieved by irradiating the sample with high-energy X-rays. It is widely used in analytical chemistry, food technologies, geology, biology, medicine, atmospheric physics, metallurgy, study of cultural heritage.

The name XRF (X-Ray Fluorescence) indicates, by convention, the analysis technique in which the ionizing radiation that causes the emission of the specific fluorescence is still made up of X-rays. In particular, through wavelength dispersive XRF analysis (acronym WD XRF), the radiation emitted (Fluorescence) is geometrically dispersed by a crystal, so that the different energies, i.e. the different lines of the spectrum, can be detected as a function of the dispersion angle, similarly to what happens with a common UV-VIS spectrophotometer. WD XRF has advantages of better resolution of elements with close emission lines, especially in the low atomic number region. However, it mostly requires high excitation tube powers and the equipment is larger and more expensive.

In the case of vacuum analysis, for example by means of WD XRF spectrometry, if the sample is in powder form it is necessary to avoid its dispersion in the analysis chamber by compacting it into a tablet.

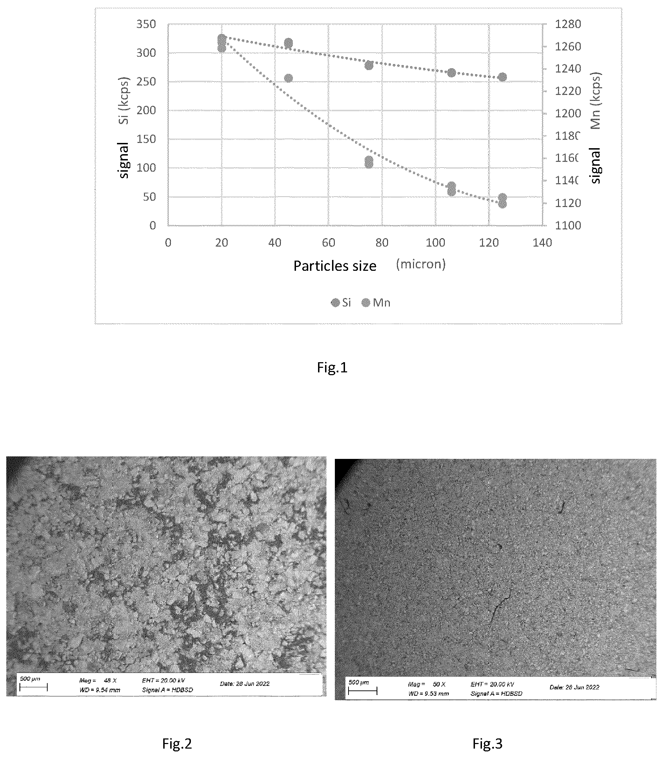

The technique of obtaining a tablet requires the use of a binding element. Commonly used binding elements can be solid or liquid. The instrumental response of the analyte, i.e. the chemical species that must be determined during a chemical analysis, is related to the particle size of the powder. In other words, the emission signal of an analyte, at the same concentration, can be higher or lower depending on the size of the particles that make up the powder. As an example, is shown the graph that correlates the intensity of the XRF signal with the size of the particles for the silicon (Si) and manganese (Mn) elements (Figure 1), said graph obtained by analyzing the same sample ground and sieved at different grain sizes.

This effect can be eliminated by grinding the powders in order to always obtain the same particle size dispersion, but this working method is very complex and laborious, as this parameter is not easily controllable.

Furthermore, in the literature there is evidence of the use of correctives to vary the result of the analysis, by adding internal standards to the powder during the analysis. By internal standard we mean the introduction into the samples to be analyzed of a known quantity of an element or compound not present in the sample but with a similar behavior to the analyte. These standards are characterized by a very low grain size and are not affected by interference. In fact, interference is only observed above a certain size, which is different for each analyte. If internal standards are added in equal quantities to samples of different particle sizes, their constant emission signal can be used to "normalize" the altered signals of the analytes. These are usually solid compounds (Ba or Sr carbonates, Zn sulphide, Zn borate) or dissolved in ethanol (La, Y, Sr, Ba nitrates). However, these compounds are problematic: the first, solid, require careful homogenization with the sample; the latter, liquids, often present problems of toxicity, long evaporation times, hygroscopicity and reduced solubility in solvent.

However, on the basis of a study conducted by the owner of the present invention, it was demonstrated that the signal of the internal standard remains constant only for extremely low grain sizes, while it increases constantly with the increase in sample size (since the space between the particles increases of sample, which is occupied by the binder containing the internal standard). As an example, Figure 2 and Figure 3 show the comparison between two micrographs of powders with different grain sizes (fine powder on the right, coarse powder on the left), in which it is noted how the binder (visible as a dark area) is present in greater quantities in the intra-particle spaces of the coarse powder.

Few examples of tracers can be found in the literature, since the standardization method on samples in tablet form for XRF is not yet a widespread technique. The few articles dedicated to the topic report attempts in the academic field. As already indicated, the substances used are generally solid compounds to be ground together with the sample (Ba or Sr carbonates, Zn sulphide, Zn borate). However, this insertion method does not guarantee homogeneous distribution. Furthermore, in order to use the technique with internal standard, it is necessary for the tracer to have a very low particle size, so that the fluorescence emission intensity is independent of it. These aspects make this addition method very complex and laborious.

Furthermore, as regards the binders normally used and reported in the literature, there is evidence of the use of methyl methacrylate dissolved in acetone. This polymer has the sought-after properties, however the method of use in acetone has the following disadvantages:
- methyl methacrylate at the necessary concentration (20%) dissolves very slowly in acetone (measured time >12h);
- after addition of the binder solution to the powder sample, evaporation times are long (for very fine powders >20 minutes) and sometimes it is necessary to heat the container under an infrared lamp.

A related method for preparing samples for spectrometric analysis by X-ray fluorescence is disclosed in MZYK ZOFIA ET AL: "Research on grain size effect in XRF analysis of pelletized samples",X-RAY SPECTROMETRY, vol. 31, no. 1, 2002, pages 39-46, whereby a selected internal standard in the form of a compound soluble in ethanol was dissolved in the latter. A measured volume of the solution was added to a weighed portion of a sample. During the processes of mixing or milling the sample, ethanol was removed by evaporation.

There is, therefore, a need to obtain a rapid and efficient method for adding the different elements, such as the binder and the internal standard, to the analyte powder for the preparation of samples for spectrometric analysis using X-ray fluorescence, so that are affected by the effect on the different grain size.

### Summary of the invention

The solution of the technical problems referred to in the previous paragraph is obtained, according to the present invention, with an improved method for the preparation of samples and analysis by spectrometric analysis using X-ray fluorescence.

According to an aspect of the present invention, a method is therefore described for the spectrometric analysis of one or more analytes in which the binding element and the internal standard have been optimized in their composition and are added with a single addition, having the characteristics set out in independent method claim 1 attached to the present description. The correlation between the particle size of the sample and the intensity of the analytical response of the internal standard is used to correct the analytical signal of the elements of interest in the sample.

Further preferred and/or particularly advantageous ways of implementing the aforementioned method are described according to the characteristics set out in the attached dependent claims.

### Brief description of the drawings

The invention will now be described with reference to the attached drawings, which illustrate some non-limiting implementation examples, in which:
- figure 1 illustrates the graph that correlates the intensity of the XRF signal with the size of the particles for the elements silicon (Si) and manganese (Mn), obtained by analyzing the same sample ground and sieved at different grain sizes,
- figure 2 illustrates a micrograph of coarse-grained powders, in which it is noted that the binder is present in smaller quantities in the intra-particle spaces,
- figure 3 illustrates a micrograph of fine-grained powders, in which it is noted that the binder is present in greater quantities in the intra-particle spaces,
- figure 4 illustrates the graph showing the emission signal at three different wavelengths of the internal standard as a function of the particle size of the sample.

### Detailed description

According to a first aspect of the present invention, the method for preparing samples for spectrometric analysis using X-ray fluorescence includes the steps of:
- select a quantity of analyte (powder material) to analyze;
- add a known and equal quantity of binder and tracer to the analyte for all samples (calibration and unknown);
- mix the composition;
- dry the composition, using a specific solvent;
- transfer the dried residue into the container for pressing;
- press the dried residue to form the tablet;
- remove the tablet obtained from the container;
- subject the tablet to spectrometric analysis using X-ray fluorescence;
- correct the emission data by applying a calculated instrumental correction factor.

For the type of samples to be analyzed, according to the present invention, the binder must possess the following properties:
- waterproofing against atmospheric agents;
- resistance to high temperatures and X-ray radiation;
- it must not dissolve elements of analytical interest in the analysis sample.

Furthermore, according to the method of the present invention, binder and tracer are added in a single addition, without the need for further grinding.

Therefore, according to the present invention, a methyl methacrylate (MMA) binder solvent optimized for such purposes has been developed.

A variety of tests were carried out and the results are reported in the Table 1.

**Table 1**

| | MMA Dissolution time (approximate) | Evaporation time (approximate) |
|---|---|---|
| Acetone | 14h | 30' |
| Hexane | not soluble | - |
| Acetone + Hexane | 3h | 10' |
| Hexane + Ethanol | 3h | 10' |
| Hexane + Ethanol +Acetone | 30' | 5' |

As can be seen from Table 1 above, the shorter dissolution time and the shorter evaporation time of methyl methacrylate correspond to the mixture comprising: hexane, ethanol and acetone.

Advantageously, the use of methyl methacrylate dissolved in hexane, ethanol and acetone as a binder optimizes its potential.

In addition to this, the method of inserting the tracer (internal standard) into the sample was also the result of numerous tests and experiments to obtain extreme speed of use, homogeneity in distribution and whose addition was contextual to that of the binder, i.e., with a addition only.

As already indicated, in order to use the standardization technique, it is necessary for the tracer to have a very low particle size, so that the fluorescence emission intensity is independent of it and depends only on its inter-particle concentration. These aspects make this addition method very complex and laborious. Even the substances used in the literature such as lanthanum (La), yttrium (Y), strontium (Sr), barium (Ba) nitrates dissolved in ethanol have not proved to be optimal, according to the present invention since they are not soluble in the solvent mixture of the binder, as defined above.

According to a further aspect of the present invention, the tracer or internal standard has been made so that:
- contains an analyte not present in the samples to be analyzed and that this analyte is measurable with XRF spectrometry;
- occurs in a soluble form in the hexane-acetone-ethanol mixture.

Multiple attempts have been made with commercial or laboratory-synthesized organometallic compounds. Among these we mention:
- Barium oleate
- Lead, zinc or copper acetylacetonate
- Sodium salicylate
- Lanthanum tris(2,4-pentanedionate).
- Barium pentandionate
- Cadmium and copper cyclohexanebutyrate

None of these salts, however, was found to be soluble in the mixture.

Additional compounds: Zinc or lead naphthenate (IUPAC name: zinc/lead naphthalene-2-carboxylate) and Tin ethylhexanoate (IUPAC name: tin(II) 2-ethylhexanoate) were analyzed in the laboratory and the results showed that these compounds, easily available on the market and very cheap, they are in liquid form and are completely and instantly soluble in the hexane, ethanol and acetone mixture. They are therefore optimal as an internal standard. Please remember that by internal standard we mean the introduction into the samples to be analyzed of a known quantity of an element or compound not present in the sample but with a similar behavior to the analyte.

Numerous laboratory tests have shown that the optimal solution includes: 20% methyl methacrylate (binder) + 10% Pb or Zn naphthenate (internal standard) in a mixture of 50% acetone-25% ethanol-25% hexane. This solution is stable over time and for use for analytical purposes it is added in quantities of 2 grams per 15 grams of powder.

Advantageously, the tablet obtained according to the method of the present invention is stable over time, usable for the calibration of instruments and marketable.

Furthermore, numerous tests were carried out to obtain optimal pressing conditions. As illustrated above, the powder sample is added to the binder in liquid form, mixed, dried completely and transferred to the container in which it will be compacted. The container, introduced into the hydraulic press, is subjected to a compaction cycle.

The tests carried out at different pressures and pressing times highlighted the results shown in Table 2 below. As can be easily seen, the optimal pressing values are obtained at a pressure between 0-300 kN for a time equal to 60 seconds, a maintenance at a pressure between 300-300 kN for a time equal to 60 seconds, a release at a pressure between 300-0 kN for a time equal to 60 seconds.

**Table 2**

| | Pressing cycles with different times | | | | |
|---|---|---|---|---|---|
| | | TEST 1 | TEST 2 | TEST 3 | TEST 4 |
| phase | pressure | Duration sec | Duration sec | Durata sec | Durata sec |
| pressing | 0-300 kN | 60 | 30 | 60 | 60 |
| maintenan ce | 300-300 kN | 60 | 60 | 60 | 30 |
| release | 300-0 kN | 60 | 60 | 30 | 60 |
| | | Ok | uneven surface | detachment of parts of the sample | uncompacted sample |

Further tests were carried out at different pressures, as shown in Table 3 below.

**Table 3**

| | Pressing cycles at different pressures |
|---|---|
| Pressure cycle | |
| 0-100-0 kN | sample not sufficiently compacted |
| 0-200-0 kN | sample not sufficiently compacted |
| 0-300-0 kN | OK |

Also in this case, the optimal pressure, in which the tablet obtained is sufficiently compact, is easily identifiable and is between 0-300-0 kN. At lower compression pressures, the tablet is not compact enough for its use.

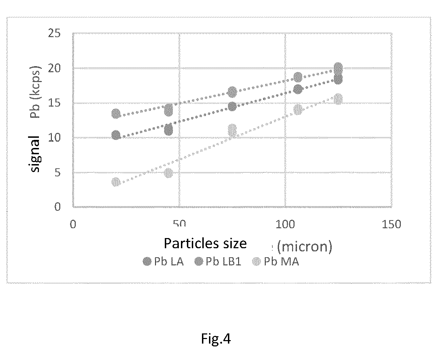

Figure 4 shows the final result with a graph showing the emission signal at three different wavelengths of the internal standard (in this case lead) as a function of the size of the sample particles.

In Tabella 4 si riporta un esempio di analisi su quattro polveri dello stesso campione contenente silicio 32% e manganese 62%, due a granulometria bassa (45 micron) e due a granulometria alta (106 micron). Si specifica che lo strumento è calibrato con compresse ottenute da polveri con granulometria inferiore a 45 micrometri. In un caso è stata effettuata l'analisi senza correzione, nell'altro è stata applicata la correzione con standard interno. La situazione è volutamente estremizzata per enfatizzare l'effetto granulometrico.

| without correction | **Si%** | **Mn%** |
|---|---|---|
| **45 micron** | 29,48 | 58,37 |
| **45 micron** | 30,1 | 58,75 |
| **106 micron** | 26,26 | 53,32 |
| **106 micron** | 27,17 | 53,97 |
| *media* | 28,3 | 56,1 |
| *dev.standard* | 1,8 | 2,9 |

**Table 4**

| with correction | **Si%** | **Mn%** |
|---|---|---|
| **45 micron** | 31,43 | 61,84 |
| **45 micron** | 32,03 | 62,13 |
| **106 micron** | 31,09 | 61,65 |
| **106 micron** | 31,88 | 62,07 |
| *media* | 31,6 | 61,9 |
| *dev.standard* | 0,4 | 0,2 |

Although at least one exemplary embodiment has been presented in the summary and detailed description, it must be understood that there is a large number of variations falling within the scope of protection of the invention. Furthermore, it must be understood that the embodiment or embodiments presented are only examples which are not intended to limit in any way the scope of protection of the invention or its application or its configurations. Rather, the summary and detailed description provide the skilled technician in the sector with a convenient guide to implement at least one exemplary embodiment, it being clear that numerous variations can be made in the function and assembly of the elements described herein, without departing from the scope of protection of the invention as established by the attached claims.

## Claims

1. Method for preparing samples for spectrometric analysis by X-ray fluorescence, includes the steps of:
- selecting a quantity of analyte to be analyzed;
- adding to the analyte a solution comprising both a binder and an internal standard, wherein the addition is executed in a single step of adding said solution, the method does not comprise a step of for further grinding;
- mixing the composition;
- drying the composition, using a specific solvent;
- transferring the dried residue inside the container for pressing;
- pressing the dried residue to form a tablet;
- extracting the tablet obtained from the container;
- subjecting the tablet to spectrometric analysis using X-ray fluorescence,
- correcting the analyte signal using a correction factor calculated on the basis of the internal standard signal.

2. Method according to claim 1, wherein the binder is a composition comprising methyl methacrylate, hexane, ethanol and acetone.

3. Method according to claim 1 or 2, wherein the tracer is Pb or Zn naphthenate.

4. Method according to any of the preceding claims, wherein the solution comprising the tracer and the binder is equal to: 20% of methyl methacrylate, 2% of Pb or Zn naphthenate, in a mixture of 50% acetone, 25% ethanol and 25% hexane, and 2% Pb or Zn naphthenate.

5. Method according to any of the preceding claims, wherein the pressing step of the dried residue to form the tablet is carried out at a pressure of between 0-300 kN for a time equal to 60 seconds, a pressure of between 300-300 kN being maintained for a time equal to 60 seconds, a release at a pressure between 300-0 kN for a time equal to 60 seconds.

## Patentansprüche

1. Verfahren zur Probenvorbereitung für die spektrometrische Analyse mittels Röntgenfluoreszenz, umfassend die folgenden Schritte:
- Auswahl der zu analysierenden Analytmenge;
- Zugabe einer Lösung, die sowohl ein Bindemittel als auch einen internen Standard enthält, zum Analyten. Die Zugabe erfolgt in einem einzigen Schritt; das Verfahren umfasst keinen weiteren Mahlschritt;
- Mischen der Zusammensetzung;
- Trocknen der Zusammensetzung mit einem spezifischen Lösungsmittel;
- Überführen des getrockneten Rückstands in den Behälter zum Pressen;
- Pressen des getrockneten Rückstands zu einer Tablette;
- Entnehmen der erhaltenen Tablette aus dem Behälter;
- Unterziehen der Tablette einer spektrometrischen Analyse mittels Röntgenfluoreszenz;
- Korrektur des Analytsignals mit einem Korrekturfaktor, der auf Basis des internen Standardsignals berechnet wird.

2. Verfahren nach Anspruch 1, wobei das Bindemittel eine Zusammensetzung aus Methylmethacrylat, Hexan, Ethanol und Aceton ist.

3. Verfahren nach Anspruch 1 oder 2, wobei der Tracer Pb- oder Zn-Naphthenat ist.

4. Verfahren nach einem der vorhergehenden Ansprüche, wobei die Lösung, die den Tracer und das Bindemittel enthält, 20 % Methylmethacrylat, 2 % Pb- oder Zn-Naphthenat in einer Mischung aus 50 % Aceton, 25 % Ethanol und 25 % Hexan sowie 2 % Pb- oder Zn-Naphthenat enthält.

5. Verfahren nach einem der vorhergehenden Ansprüche, wobei der Pressschritt des getrockneten Rückstands zur Bildung der Tablette bei einem Druck zwischen 0 und 300 kN für eine Zeit von 60 Sekunden durchgeführt wird, ein Druck zwischen 300 und 300 kN für eine Zeit von 60 Sekunden aufrechterhalten wird und eine Entspannung bei einem Druck zwischen 300 und 0 kN für eine Zeit von 60 Sekunden erfolgt.

## Revendications

1. Procédé de préparation d'échantillons pour analyse spectrométrique par fluorescence X, comprenant les étapes suivantes :
- sélection de la quantité d'analyte à analyser ;
- ajout à l'analyte d'une solution comprenant un liant et un étalon interne, l'ajout étant réalisé en une seule étape, sans broyage supplémentaire ;
- mélange de la composition ;
- séchage de la composition à l'aide d'un solvant spécifique ;
- transfert du résidu séché dans le récipient pour pressage ;
- pressage du résidu séché pour former un comprimé ;
- extraction du comprimé obtenu du récipient ;
- soumission du comprimé à une analyse spectrométrique par fluorescence X ;
- correction du signal de l'analyte à l'aide d'un facteur de correction calculé à partir du signal de l'étalon interne.

2. Procédé selon la revendication 1, dans lequel le liant est une composition comprenant du méthacrylate de méthyle, de l'hexane, de l'éthanol et de l'acétone.

3. Procédé selon la revendication 1 ou 2, dans lequel le traceur est du naphténate de plomb ou de zinc.

4. Procédé selon l'une quelconque des revendications précédentes, dans lequel la solution comprenant le traceur et le liant est composée de : 20 % de méthacrylate de méthyle, 2 % de naphténate de plomb ou de zinc, dans un mélange de 50 % d'acétone, 25 % d'éthanol et 25 % d'hexane, et 2 % de naphténate de plomb ou de zinc.

5. Procédé selon l'une quelconque des revendications précédentes, dans lequel l'étape de pressage du résidu séché pour former le comprimé est réalisée à une pression comprise entre 0 et 300 kN pendant 60 secondes, une pression comprise entre 300 et 300 kN étant maintenue pendant 60 secondes, et une libération à une pression comprise entre 300 et 0 kN pendant 60 secondes.
